# EUROPEAN PATENT APPLICATION

(11) **EP 1 768 015 A1**
(43) Date of publication of application: **28.03.2007**
(21) Application number: 06251558.0
(22) Date of filing: 23.03.2006
(51) Int. Cl.: G06F 3/06

(54) **Storage unit and disk control method**

(30) Priority: 13.09.2005 JP 2005264600
(71) Applicant: Hitachi, Ltd., Tokyo (JP)
(72) Inventor: Kumagai, Atsuya, Hitachi, Ltd., Tokyo 100-8220 (JP); Shiga, Kenta, Hitachi, Ltd., Tokyo 100-8220 (JP); Iwamura, Takashige, Hitachi, Ltd., Tokyo 100-8220 (JP)
(74) Representative: Hodsdon, Stephen James

(57) **Abstract**

A storage unit (100) is provided which is connected to a host computer (110) through a network (120), having one or more disks (105) in which read and write operations are performed during rotation and a control unit for controlling the rotation of the disks. In the storage unit, when receiving a message which is sent from the host computer and predicts that at least one of the disks will come in use, the control unit causes the at least one of the disks which will come in use, to rotate.

## Description

The present invention relates to a technology to reduce power consumption in a storage unit for storing mass data.

In recent years, a great number of network connection functions are implemented in storage units. With the network connection functions, the storage unit can send and receive data and commands to and from computers through a fibre channel, IP (Internet Protocol) network, and so on. Storage units with iSCSI (Internet Small Computer System Interface), which is standardized as a protocol for sending and receiving SCSI (Small Computer System Interface) commands over TCP/IP (Transmission Control Protocol/Internet Protocol), are increasingly used.

In many cases in storage units connected to a network, a host (computer) does not access hard disks (referred as disk hereafter) of the storage units all the time, however, there is a problem that all the disks of the storage units are always rotating so as to be ready for being accessed by the host resulting in increase in power consumption and short lifetime of the disks because of mechanical exhaustion, or the like.

For example, a method for emulating an SCSI device in connecting a host and a storage unit through a network is disclosed in a Japanese Patent Publication JP 2005-78641A. However, concerning a disk drive which is one of SCSI devices, it mentions execution of only SCSI commands, and therefore the disks rotate all the time in a case where the SCSI device is a disk drive.

Accordingly, MAID (Massive Array of Idle Disks) technology has been developed to temporarily stop some or all of disks in a storage unit.

However, when a host accesses a stopped disk, it needs to rotate the disk again, causing a problem that it takes longer to access the disk compared with a case where disks rotate all the time. In other words, to stop rotating some or all of disks temporarily, it is required to appropriately determine the possibility of each of the disks to be accessed by the host.

Accordingly, it would be desirable to provide a storage unit in which appropriate timing to start/stop accessing each of disks is predicted so as to start and stop rotating the disk appropriately and selectively to reduce power consumption and prolong lifetime of the disk.

In one aspect of the present invention, there is provided a storage unit connected to a host computer through a network, having one or more disks in which read and write operations are performed during rotation and a control unit for controlling the rotation of the disks. In the storage unit, when receiving a message which is sent from the host computer and predicts that at least one of the disks will come in use, the control unit causes the at least one of the disks which will come in use, to rotate.

In another aspect of the present invention, there is provided a storage unit connected to a host computer through a network, having one or more disks in which read and write operations are performed during rotation and a control unit for controlling the rotation of the disks. In the storage unit, when receiving a message which is sent from the host computer and predicts that at least one of the disks will go out of use, the control unit causes the at least one of the disks which will go out of use, to stop.

In a further aspect of the present invention, there is provided a disk control method in a storage unit which is connected to a host computer through a network and has one or more disks in which read and write operations are performed during rotation and a control unit for controlling the rotation of the disks. In the disk control method, when receiving a message which is sent from the host computer and predicts that at least one of the disks will come in use, the control unit causes the at least one of the disks which will come in use, to rotate.

In another aspect of the present invention, there is provided a disk control method in a storage unit which is connected to a host computer through a network and has one or more disks in which read and write operations are performed during rotation and a control unit for controlling the rotation of the disks. In the disk control method, when receiving a message which is sent from the host computer and predicts that at least one of the disks will go out of use, the control unit causes the at least one of the disks which will go out of use, to stop.

### BRIEF DESCRIPTION OF THE DRAWINGS

FIG. 1 is a schematic view of a computer system according to the first embodiment.
FIG. 2 is a diagram showing programs and data stored in a memory in a storage unit.
FIG. 3 is a diagram showing an example of a target-portal table.
FIG. 4 is a diagram showing an example of a target-LU table.
FIG. 5 is a diagram showing an example of an LU-disk table.
FIG. 6 is a diagram showing an example of an initiator-LU table.
FIG. 7 is a diagram showing an example of an initiator status table.
FIG. 8 is a schematic diagram showing relationship among portals, targets, LUs, and disks.
FIG. 9 is a diagram showing process sequence in iSCSI login
FIG. 10 is a diagram showing operation of a target program when an iSCSI login command is received.
FIG. 11 is a diagram showing operation of a disk start program.
FIG. 12 is a diagram showing process sequence in iSCSI logout.
FIG. 13 is a diagram showing operation of a target program when an iSCSI logout command is received.
FIG. 14 is a diagram showing operation of a disk stop program.
FIG. 15 is a diagram showing operation of a disk start program.
FIG. 16 is a diagram showing operation of a disk stop program.
FIG. 17 is a diagram showing process sequence in a discovery session.
FIG. 18 is a diagram showing process sequence when an SCN for notifying addition of initiator is received.
FIG. 19 is a diagram showing operation of a target program when an SCN for notifying addition of initiator is received.
FIG. 20 is a diagram showing process sequence when an SCN for notifying deletion of initiator is received.
FIG. 21 is a diagram showing operation of a target program when an SCN for notifying deletion of initiator is received.
FIG. 22 is a diagram showing process sequence when an iSNS database is updated (addition of initiator).
FIG. 23 is a diagram showing operation of a target program when a response for notifying addition of initiator is received.
FIG. 24 is a diagram showing process sequence when an iSNS database is updated (deletion of initiator).
FIG. 25 is a diagram showing operation of a target program when a response for notifying deletion of initiator is received.
FIG. 26 is a diagram showing operation of a target program when a message for notifying addition of initiator is received.
FIG. 27 is a diagram showing process sequence in a discovery session.

A computer system S and a disk control method thereof according to exemplary embodiments of the present invention will be described below referring to the drawings.

### FIRST EMBODIMENT

Operation when a storage unit receives an iSCSI login command from a host is described as an example of the first embodiment.

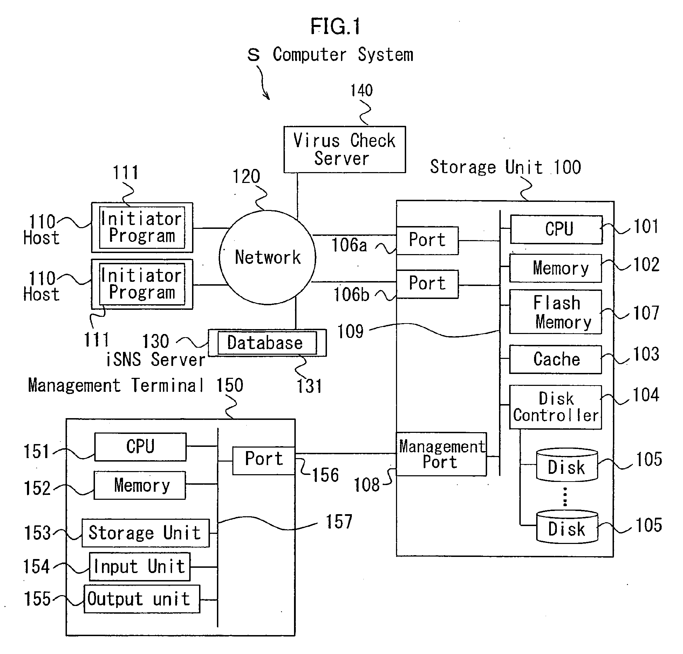

FIG. 1 is a schematic view of a computer system according to the present embodiment. As shown in FIG. 1, the computer system S includes a storage unit 100, a plurality of hosts 110 (host computers), an iSNS (Internet Storage Name Service) server 130, and a virus check server 140 connected with each other through a network 120 such as Internet, and a management terminal 150 connected to the storage unit 100.

The host 110, which is an information processing unit for performing application programs which input and output data, has initiator programs 111 for accessing the storage unit 100.

The storage unit 100 has a CPU (Central Processing Unit) 101 (control unit), a memory 102 (control unit), a cache 103 for accelerating access, a disk controller 104, one or more disks 105, a port 106a and a port 106b (also referred as ports 106 all together hereafter), a flash memory 107, a management port 108, and a bus 109 for connecting these units.

The CPU 101 executes programs stored in the memory 102 to perform various processes described below. The memory 102 is a unit for storing programs and data described below. The cache 103 is a unit for temporarily storing data to write. The disk controller 104 is a unit for controlling inputting and outputting data of the disks 105. Here, the disk controller 104 may perform operations equivalent to RAID (Redundant Array of Independent Disks).

The disks 105 are units for storing data read and written by the host 110. The ports 106, which are units such as network cards for connecting a LAN (Local Area Network) cable to the storage unit 100, send and receive data. Though the storage unit 100 has two ports 106 in the present embodiment, it may have three or more ports 106.

The flash memory 107 is a unit for storing programs and data which are loaded to the memory 102 when the storage 100 starts up. The management port 108 is a unit for connecting the storage unit 100 to the management terminal 150.

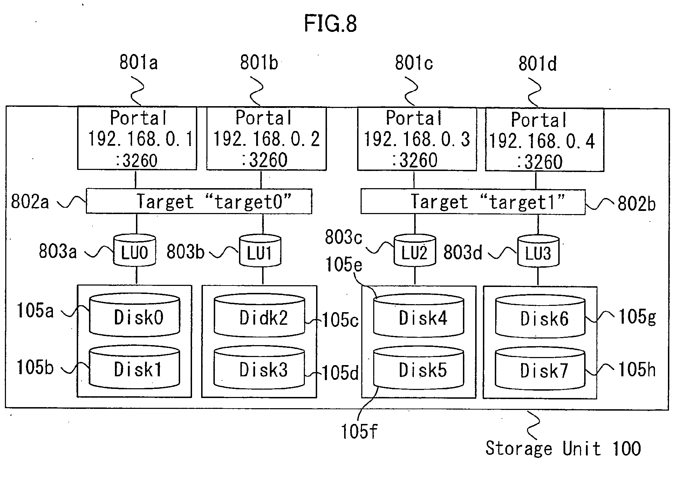

The iSNS server 130 manages information about initiators (units in the initiator program 111 in the host 110, for triggering access to the disks 105) and targets (groups of data in the disks 105 of the storage unit 100, accessed by the initiators, see FIG. 8 for details) connected to the network 120, responds to inquiries about the information from the other units, and has a database 131 as a storage means for doing those.

Here, iSNS server 130 is not necessary in the present embodiment and used in other embodiments described later.

The virus check server 140, which is a computer for detecting viruses which have entered the storage unit 100, is not necessary in the present embodiment and used in other embodiments described later.

The management terminal 150 is a computer for setting information about the storage unit 100, for example, setting a target-portal table 204 described later through a management port 108 in the storage unit 100. The management terminal 150 includes a CPU 151 as a processing means, a memory 152 as a temporary storage means, a storage unit 153 as a storage means, an input unit 154 as an input means, an output unit 155 as an output means, a port 156 as a communication means, and a bus 157 as a means for connecting the units.

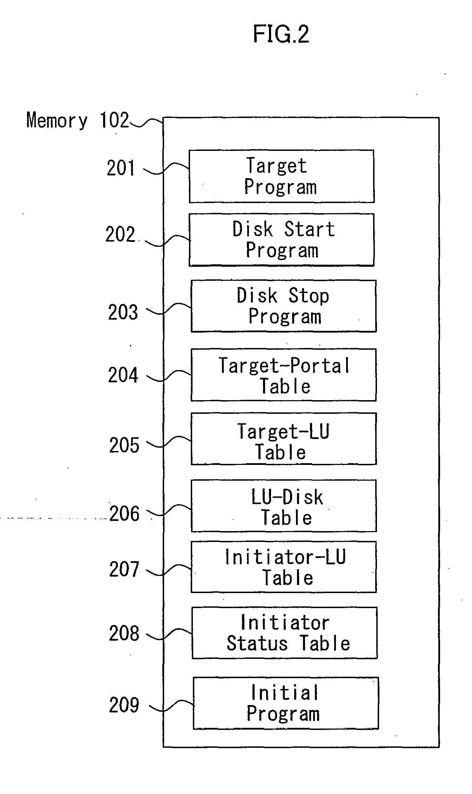

FIG. 2 shows the programs and the data stored in the memory 102 in the storage unit 100 (See FIG. 1, as needed). A target program 201, and a disk start program 202, a disk stop program 203, a target-portal table 204, a target-LU (Logical Unit: a virtual disk consisting of one or more disks 105) table 205, an LU-disk table 206, an initiator-LU table 207, an initiator status table 208, and an initial program 209 are stored in the memory 102.

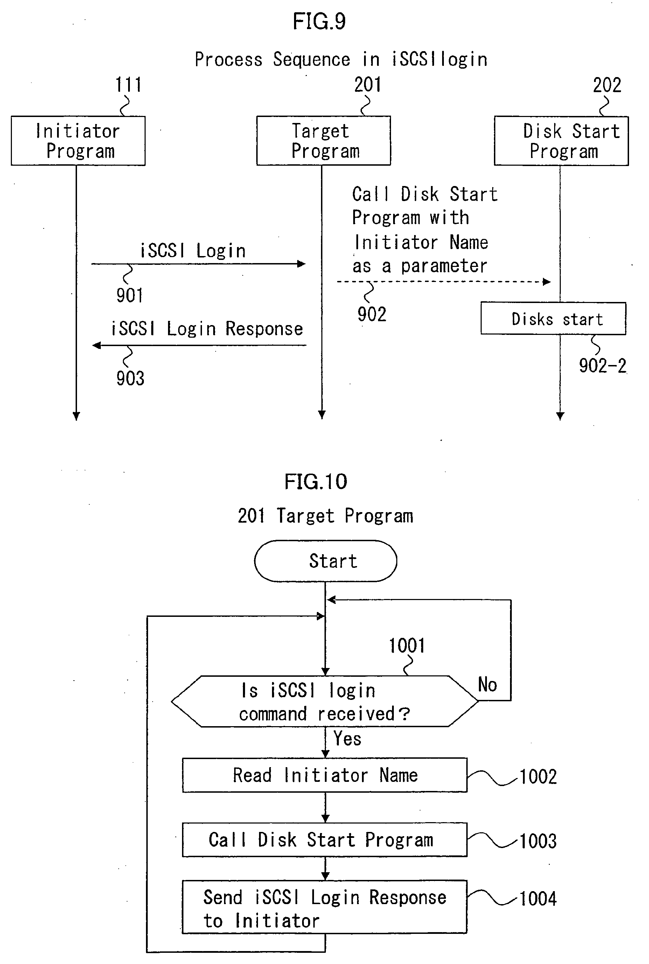

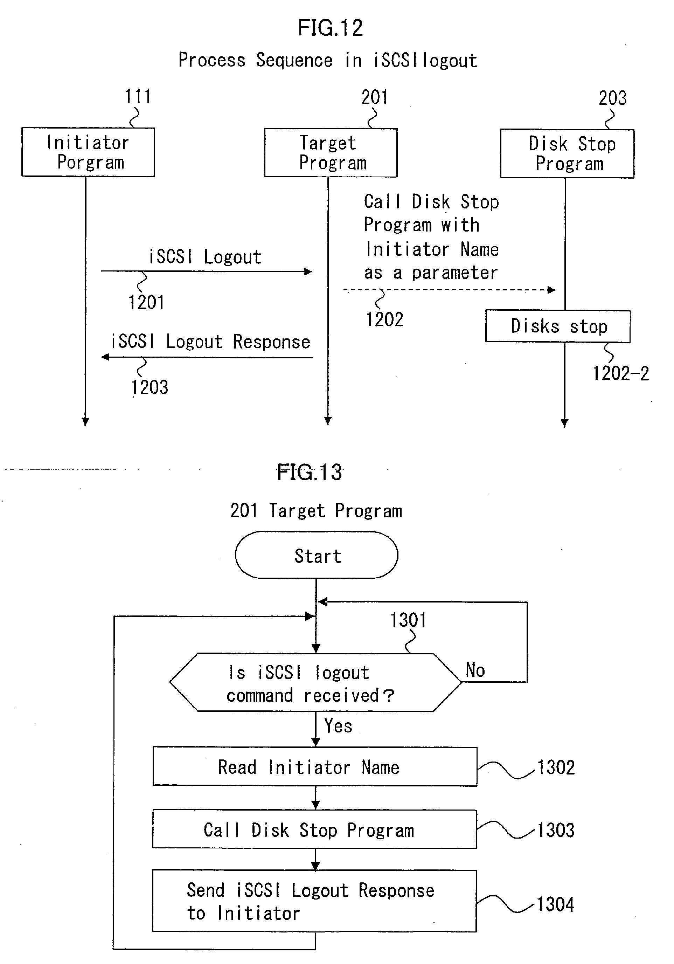

The target program 201 is a program for sending and receiving iSCSI PDUs (Protocol Data Units) to and from the initiator program 111 running on the host 110. Operation of the target program 201, which calls the disk start program 202 and the disk stop program 203 respectively triggered by receiving an iSCSI login PDU and an iSCSI logout PDU, will be described in detail referring to FIG. 10 and FIG. 13 later.

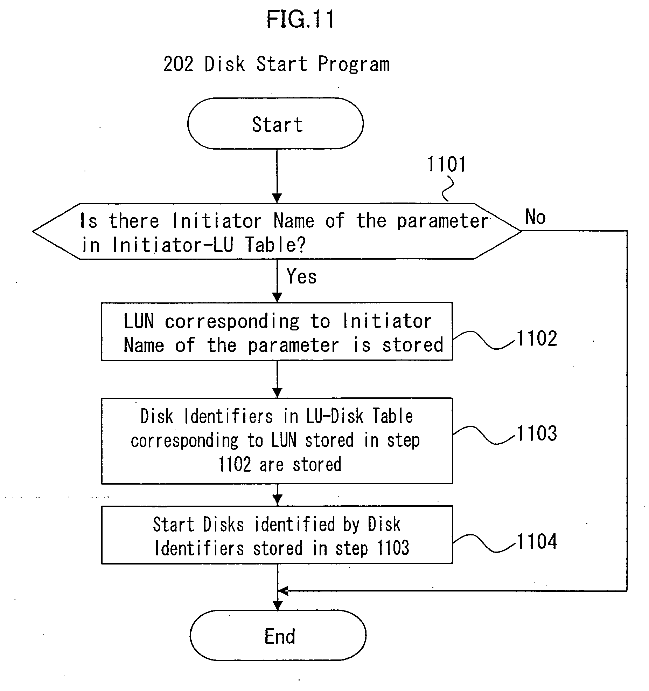

The disk start program 202 is a program for starting rotating the disks 105. Operation of the disk start program 202, which is executed by being called by the target program 201, will be described in detail referring to FIG. 11 later.

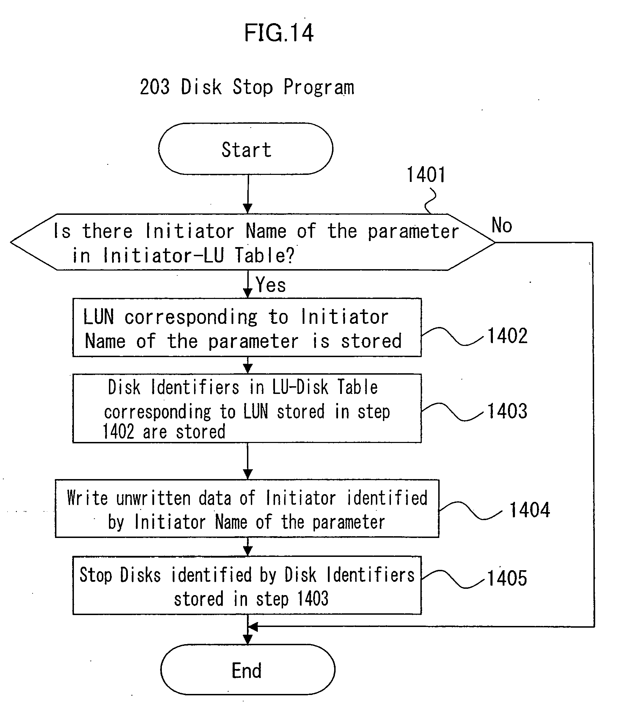

The disk stop program 203 is a program for stopping rotating the disks 105. Operation of the disk stop program 203, which is executed by being called by the target program 201, will be described in detail referring to FIG. 14 later.

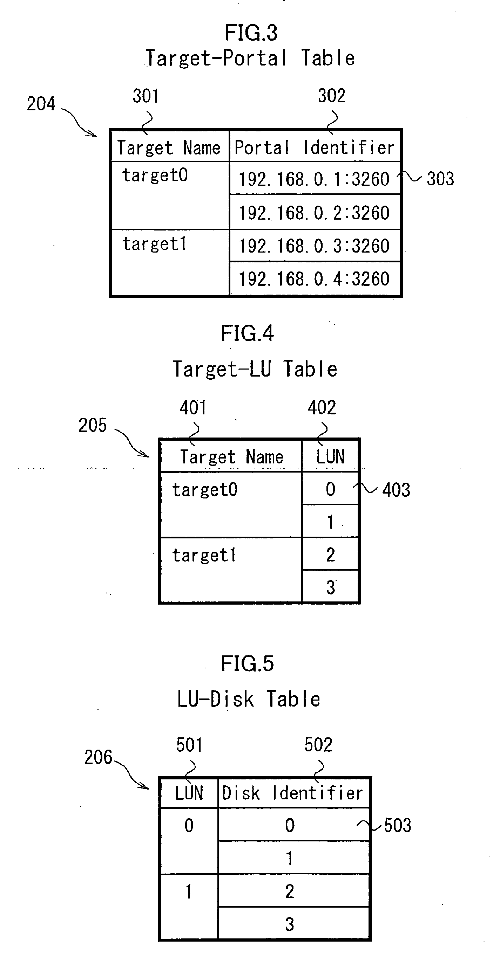

The target-portal table 204, which is a table showing correspondence between targets and portals (pairs of IP addresses and TCP port numbers, described in detail referring to FIG. 8 later), will be described in detail referring to FIG. 3 later.

The target-LU table 205, which is a table showing correspondence between targets and LUs, will be described in detail referring to FIG. 4 later.

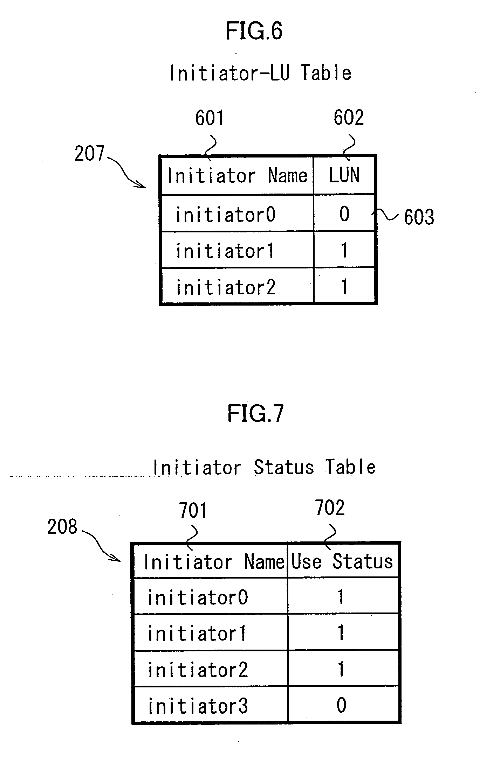

The LU-disk table 206, which is a table showing correspondence between LUs and disks, will be described in detail referring to FIG. 5 later.

The initiator-LU table 207, which is a table showing correspondence between initiators and LUs assigned to the initiators, will be described in detail referring to FIG. 6 later.

The initiator status table 208, which is a table showing initiator names and whether each of initiators is using disks or not at the point when the table is referred, will be described in detail referring to FIG. 7 later.

The initial program 209 is a program for initializing the initiator status table 208 shown in FIG. 7 such as when the storage unit 100 is powered on.

FIG. 3 shows an example of the target-portal table 204 (see FIG. 2). The target-portal table 204 is a table including sets of a target name 301 and portal identifiers 302.

The target name 301 is a name for identifying an iSCSI target. The portal identifier 302 is a pair of an IP address and a TCP port number. The cell 303 indicates that a target identified by the target name "target0" can be accessed through a portal identified by an IP address 192.168.0.1 and TCP port number 3260 or a portal identified by an IP address 192.168.0.2 and TCP port number 3260.

FIG. 4 shows an example of the target-LU table 205 (see FIG. 2). The target-LU table 205 is a table including sets of a target name 401 and LUNs (Logical Unit Numbers) 402.

The target name 401 is a name for identifying an iSCSI target similarly to the target name 301. The LUN 402 is a number for identifying an LU. The cell 403 indicates that a target identified by a target name "target0" processes input and output commands for LUs identified by LUNs "0" and "1".

By the way, the target-LU table 205 is used by the storage unit 100 to acquire internal software relationship shown in FIG. 8.

FIG. 5 shows an example of the LU-disk table 206 (see FIG. 2). The LU-disk table 206 is a table including sets of an LUN 501 and disk identifiers 502.

The LUN 501 is a number for identifying an LU similarly to the LUN 402. The disk identifier 502 is a text string for identifying the disk 105 (see FIG. 1). The cell 503 indicates that an LU identified by LUN "0" consists of disks identified by disk identifiers "0" and "1".

FIG. 6 shows an example of the initiator-LU table 207 (see FIG. 2). The initiator-LU table 207 is a table including pairs of an initiator name 601 and an LUN 602.

The initiator name 601 is a name for identifying an iSCSI initiator. LUN 602 is a number for identifying LU similarly to LUN 402. The cell 603 indicates that an initiator identified by an initiator name "initiator0" can read and write data in an LU identified by an LUN "0".

FIG. 7 shows an example of the initiator status table 208 (see FIG. 2). The initiator status table 208 is a table including pairs of an initiator name 701 and a use status 702.

For example, FIG. 7 indicates that initiators identified by initiator names "initiator 0", "initiator1", and "initiator2" are using disks (the use statuses 702 are "1") and an initiator identified by an initiator name "initiator 3" is not using disks (the use status 702 is "0"), at that point.

FIG. 8 is a schematic diagram showing internal software relationship among portals, targets, LUs, and disks in the storage unit 100 shown in the target-portal table 204, the target-LU table 205, the LU-disk table 206, and the initiator-LU table 207 (see FIGs. 1-7, as needed).

Portals 801 (801a-801d) are identified by pairs of an IP address and a TCP port number for accessing targets. Targets 802 (802a and 802b), which are identified by target names, exchange iSCSI PDUs with initiators. Here, there may be a plurality of different targets in the storage unit 100.

Meanwhile, LU0-LU3 (803a-803d) are the LUs described above, and disk0-disk7 (105a-105h) are similar to the disks 105 described above.

Next, operation of the computer system S is described. Here, an example in a case where only one initiator is assigned to an LU is described in the present embodiment (see FIG. 1, and so on as needed).

Also, a case where an initiator knows a target name of a target from the first, that is, operation in a normal session is described in this and the second embodiments.

FIG. 9 is a diagram illustrating exchange of messages and data among the initiator program 111, the target program 201, and the disk start program 202 when the initiator program 111 sends an iSCSI login command to the target program 201.

First, the initiator program 111 sends an iSCSI login command to the target program 201 (step 901).

Next, the target program 201 calls the disk start program 202 with an initiator name contained in the iSCSI login command, as a parameter (step 902), and thereby the disk start program 202 starts rotating the disks 105 (902-2).

In addition, the target program 201 sends a response for the iSCSI login to the initiator program 111 (step 903).

Thus, it is possible to start rotating the disks 105 when the iSCSI login command, which is a message predicting to start using the disks 105, is sent from the initiator program 111 to the target program 201.

FIG. 10 is a diagram showing operation of the target program 201 when the iSCSI login command is received (step 901 in FIG. 9). The CPU 101 executes the target program 201 stored in the memory 102 to process this operation.

First, the target program 201 receives an iSCSI login command from the initiator program 111 (Yes in step 1001) and reads an initiator name contained in the iSCSI login command (step 1002). And then, the target program 201 calls the disk start program 202 with the initiator name as a parameter (step 1003).

Next, the target program 201 sends a response for iSCSI login to the initiator program 111 (step 1004).

Thus, the target program 201 can start rotating the disks 105 when having received an iSCSI login command.

FIG. 11 is a diagram showing operation of the disk start program 202. The CPU 101 executes the disk start program 202 stored in the memory 102 to perform this operation.

The disk start program 202 searches the initiator-LU table 207 (see FIG. 6) for the initiator name of the parameter (step 1101), and ends the process if there is not the initiator name of the parameter (No).

If there is the initiator name of the parameter in the initiator-LU table 207 (Yes in step 1101), an LUN (602) corresponding to the initiator name of the parameter is stored in a predetermined memory area in the memory 102 (step 1102).

Next, the disk start program 202 stores disk identifiers (502) in the LU-disk table 206 (see FIG. 5) corresponding to the LUN stored in step 1102, in a predetermined memory area in the memory 102 (step 1103).

Moreover, the disk start program 202 starts rotating disks 105 identified by the disk identifiers stored in step 1103 (step 1104). For example, when an initiator name of a parameter is "initiator0", the disk start program 202 starts rotating disks identified by disk identifiers "0" and "1" (see FIG. 5 and FIG. 6).

Thus, the disk start program 202 can start appropriate disks 105.

FIG. 12 is a diagram illustrating exchange of messages and data among the initiator program 111, the target program 201, and the disk stop program 203 when the initiator program 111 sends an iSCSI logout command to the target program 201.

First, the initiator program 111 sends an iSCSI logout command to the target program 201 (step 1201).

Next, the target program 201 calls the disk stop program 203 with an initiator name contained in the iSCSI logout command as a parameter (step 1202), and thereby the disk stop program 203 stops rotating the disks 105 (1202-2).

In addition, the target program 201 sends a response for the iSCSI logout to the initiator program 111 (step 1203).

Thus, it is possible to stop rotating the disks 105 when the iSCSI logout command, which is a message predicting to stop using the disks 105, is sent from the initiator program 111 to the target program 201.

FIG. 13 is a diagram showing operation of the target program 201 when the iSCSI logout command is received (step 1201 in FIG. 12). The CPU 101 executes the target program 201 stored in the memory 102 to process this operation.

First, the target program 201 receives an iSCSI logout command from the initiator program 111 (Yes in step 1301) and reads an initiator name contained in the iSCSI logout command (step 1302).

Then, the target program 201 calls the disk stop program 203 with the initiator name as a parameter (step 1303). In addition, the target program 201 sends a response for iSCSI logout to the initiator program 111 (step 1304).

Thus, the target program 201 can stop rotating the disks 105 when having received an iSCSI logout command.

FIG. 14 is a diagram showing operation of the disk stop program 203. The CPU 101 executes the disk stop program 203 stored in the memory 102 to process this operation.

The disk stop program 203 searches the initiator-LU table 207 for the initiator name of the parameter (step 1401), and ends the process if there is not the initiator name of the parameter (No).

If there is the initiator name of the parameter in the initiator-LU table 207 (Yes in step 1401), an LUN (602) corresponding to the initiator name of the parameter is stored in a predetermined memory area in the memory 102 (step 1402).

Next, the disk stop program 203 stores disk identifiers (502) in the LU-disk table 206 corresponding to the LUN stored in step 1402, in a predetermined memory area in the memory 102 (step 1403).

Moreover, the disk stop program 203 writes data which have been submitted by an initiator identified by the initiator name of the parameter but not yet written to disks, to the disks 105 (step 1404). After the data have been written, the disk stop program 203 stops rotating disks 105 identified by the disk identifiers stored in step 1403 (step 1405). For example, when an initiator name of a parameter is "initiator0", the disk stop program 203 stops rotating disks 105 identified by disk identifiers "0" and "1" (see FIG. 5 and FIG. 6).

Thus, it is possible to stop rotating disks at the same time when an initiator stops using the disks such as when shutting down the host 110, so as to reduce power consumption for rotating the disks and prolong lifetime of the disks.

### SECOND EMBODIMENT

It is assumed in the first embodiment that only one initiator is assigned to an LU. In the second embodiment, a case where a plurality of initiators are assigned to an LU is described.

Here, operation of the target program 201 when an iSCSI login command is received is similar to the operation in the first embodiment.

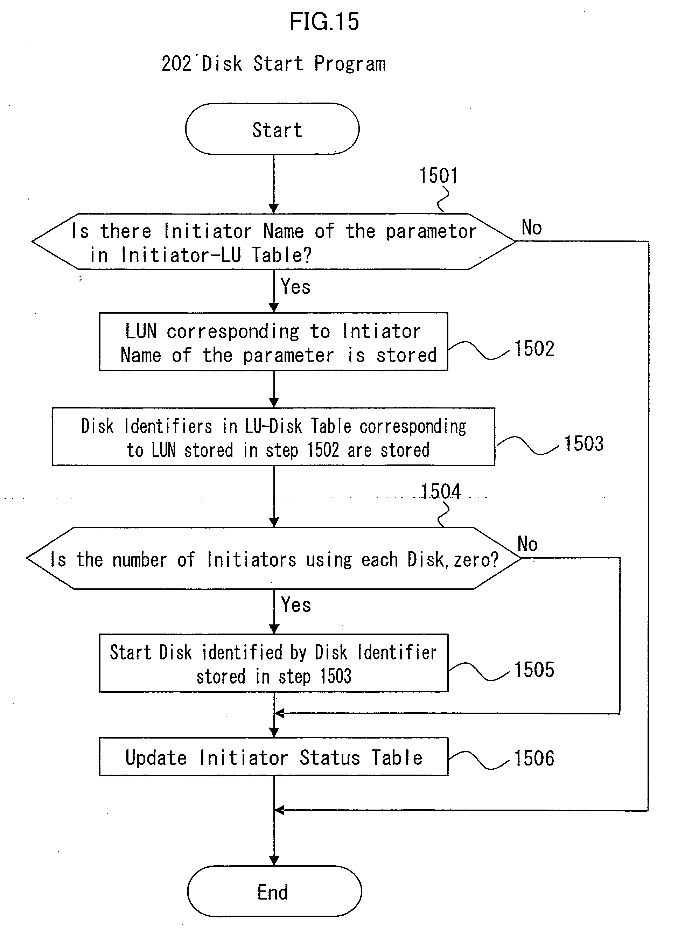

FIG. 15 is a diagram showing operation of the disk start program 202 (see Fig 1, and so on as needed). The CPU 101 executes the disk start program 202 stored in the memory 102 to process this operation.

The disk start program 202 searches the initiator-LU table 207 for the initiator name of the parameter (step 1501), and ends the process if there is not the initiator name of the parameter (No).

If there is the initiator name of the parameter in the initiator-LU table 207 (Yes in step 1501), an LUN (602) corresponding to the initiator name of the parameter is stored in a predetermined memory area in the memory 102 (step 1502).

Then, the disk start program 202 stores disk identifiers (502) in the LU-disk table 206 corresponding to the LUN stored in step 1502, in a predetermined memory area in the memory 102 (step 1503). In addition, the disk start program 202 determines whether the number of initiators which are using a disk identified by each of the disk identifiers stored in step 1502 is 0 or not (step 1504). If the number is 0 (Yes), the disk start program 202 starts rotating the disk identified by the disk identifier stored in step 1503 (step 1505).

For example, when an initiator name of a parameter is "initiator0", the disk start program 202 starts each of disks identified by disk identifiers "0" and "1" (see FIG. 5 and FIG. 6) if the number of initiators which are using the disk is 0.

Meanwhile, if the number of initiators which are using each of the disks assigned to the initiator identified by the initiator name of the parameter is greater than or equal to 1 (No in step 1504), it is not necessary to start rotating the disk any more since the disk is already rotating.

Finally, the disk start program 202 changes a use status in a row with the initiator name of the parameter to "1" in the initiator status table 208 (step 1506) and ends the process.

Thus, the disk start program 202 can appropriately start only stopped disks 105 of the disks 105 corresponding to the received iSCSI login command.

Here, operation of the target program 201 when an iSCSI logout command is received is similar to the operation in the first embodiment.

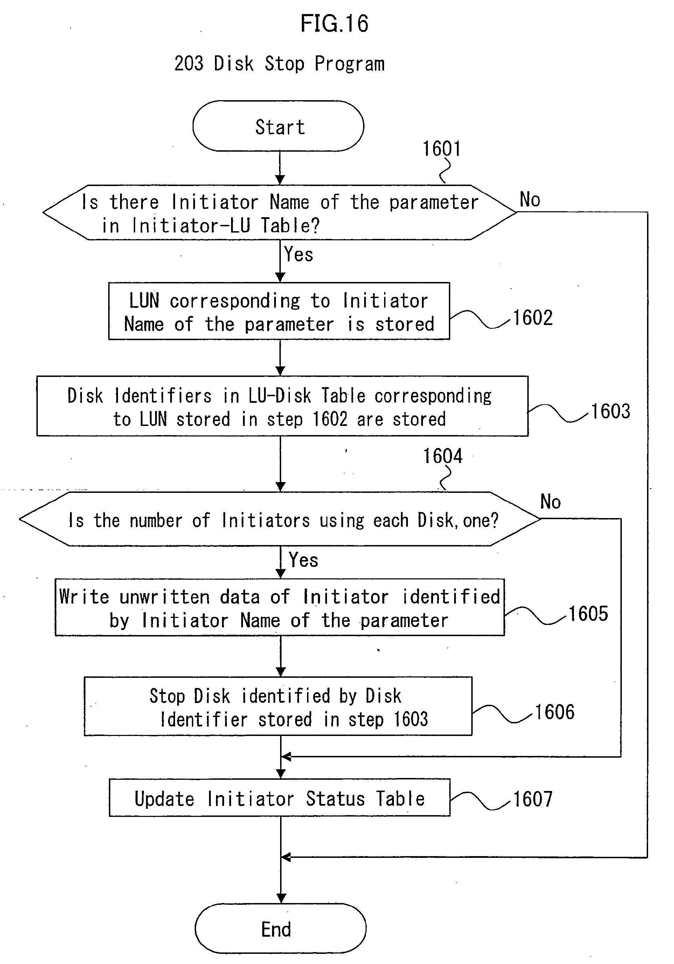

FIG. 16 is a diagram showing operation of the disk stop program 203. The CPU 101 executes the disk stop program 203 stored in the memory 102 to process this operation.

The disk stop program 203 searches the initiator-LU table 207 for the initiator name of the parameter (step 1601), and ends the process if there is not the initiator name of the parameter (No).

If there is the initiator name of the parameter in the initiator-LU table 207 (Yes in step 1601), an LUN (602) corresponding to the initiator name of the parameter is stored in a predetermined memory area in the memory 102 (step 1602).

Then, the disk stop program 203 stores disk identifiers (502) in the LU-disk table 206 corresponding to the LUN stored in step 1602, in a predetermined memory area in the memory 102 (step 1603).

Moreover, the disk stop program 203 searches the LU-disk table 206 and the initiator-LU table 207 to determine whether the number of initiators which are using each of the disks assigned to an initiator identified by the initiator name of the parameter is equal to 1, that is, whether the number of the initiators becomes 0 when decremented by 1. If the number is 1 (Yes in step 1604), the disk stop program 203 writes data which have been submitted by the initiator identified by the initiator name of the parameter but not yet written to disks, to the disks 105 (step 1605).

After the data have been written, the disk stop program 203 stops the disk 105 identified by the disk identifier stored in step 1603 (step 1606). For example, when an initiator name of a parameter is "initiator0", the disk stop program 203 stops each of disks 105 identified by disk identifiers "0" and "1" (see FIG. 5 and FIG. 6) if the number of initiators which are using the disk is 1.

Meanwhile, if the number of initiators which are using each of the disks assigned to the initiator identified by the initiator name of the parameter is greater than or equal to 2 (No in step 1604), the disk should not be stopped since the disk is still being used by the other initiators.

Finally, the disk stop program 203 changes a use status in a row with the initiator name of the parameter to "0" in the initiator status table 208 (step 1607) and ends the process.

Thus, it is possible to keep stopping rotation of each of the disks 105 while the number of initiators which are using the disk 105 is 0 even when a plurality of initiators are assigned to an LU.

### THIRD EMBODIMENT

In the first and the second embodiments, rotation of disks 105 is started triggered by receiving an iSCSI login for a normal session. In this embodiment, an example in a case where rotation of disks 105 is started triggered by receiving an iSCSI login for a discovery session is described. Here, the discovery session is a session in which an initiator specifies a target name using an IP address and a TC port number of a target.

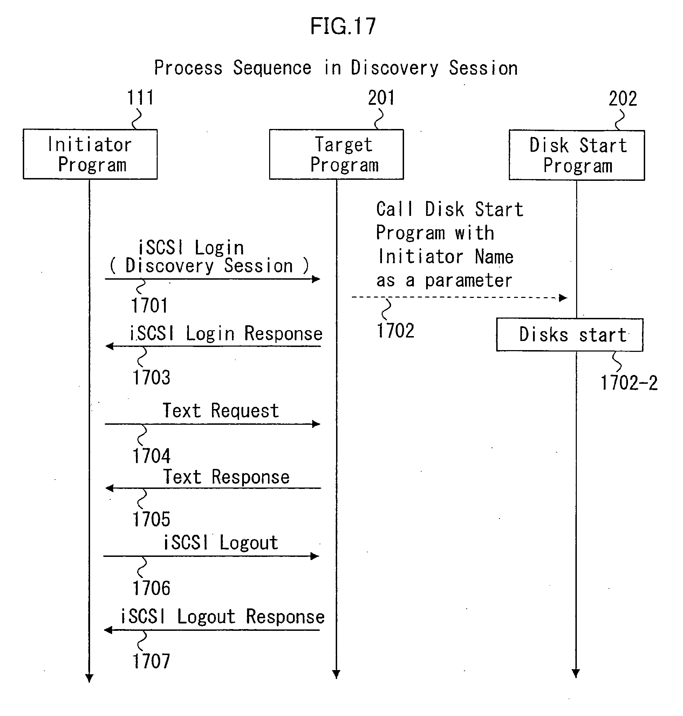

FIG. 17 is a diagram illustrating exchange of messages and data among the initiator program 111, the target program 201, and the disk start program 202 when the initiator program 111 sends an iSCSI login command for a discovery session to the target program 201 (See FIG. 1, and so on as needed).

First, the initiator program 111 sends an iSCSI login command for a discovery session to the target program 201 (step 1701).

The target program 201 calls the disk start program 202 with an initiator name contained in the iSCSI login command, as a parameter (step 1702), and thereby the disk start program 202 starts rotating the disks 105 (1702-2).

The initiator program 111 receives a response for the iSCSI login from the target program 201 (step 1703) and then sends an IP address and a TCP port number to the target program 201 by a Text Request command to inquire a target name (step 1704).

When the target program 201 receives the IP address and the TCP port number (step 1704), the target program 201 specifies a target name by searching the target-portal table 204 (see FIG. 3) and informs the target name to the initiator program 111 using a Text Response command (step 1705).

After that, the initiator program 111 sends an iSCSI logout command to the target program 201 (step 1706) and receives a response for the iSCSI logout from the target program 201 (step 1707), and then the discovery session ends.

Here, operation of the target program 201 when an iSCSI login command is received is similar to the operation in the first embodiment excepting that the iSCSI login is for a discovery session.

Additionally, operation in step 1702-2 in the disk start program 202 is similar to the operation in the first embodiment when only one initiator is assigned to an LU and the operation in the second embodiment when a plurality of initiators are assigned to an LU.

Though the target program 201 calls the disk start program 202 triggered by receiving an iSCSI login command for a discovery session in the present embodiment, the disk start program 202 may be called triggered by receiving a Text Request command or an iSCSI logout command for a discovery session instead.

Here, operation of the target program 201 when an iSCSI logout command for a normal session is received is similar to the operation in the first or the second embodiment.

Thus, the target program 201 can also start rotating disks 105 appropriately even in a discovery session.

### FOURTH EMBODIMENT

In the embodiments described above, rotation of disks is started or stopped triggered by receiving an iSCSI command. In the fourth embodiment, rotation of disks is started or stopped triggered by receiving an iSNS message (see FIG. 1, and so on as needed).

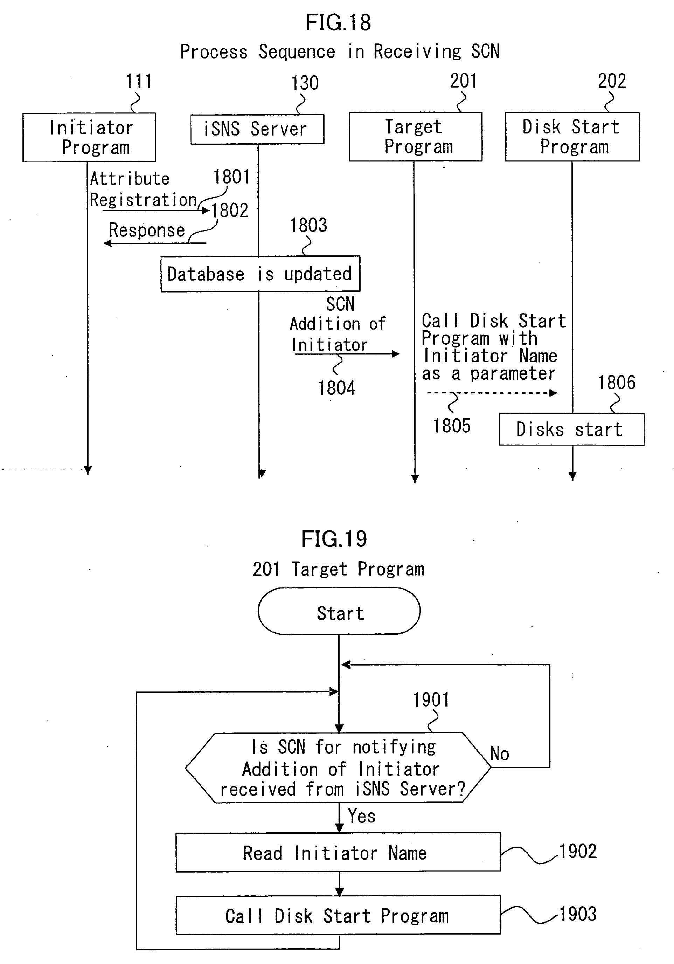

FIG. 18 is a diagram illustrating exchange of messages and data among the initiator program 111, the iSNS server 130, the target program 201, and the disk start program 202 when the initiator program 111 registers attribute to the iSNS server 130.

First, the initiator program 111 performs attribute registration to the iSNS server 130 (step 1801). Attribute registration is, for example, to register an initiator name and an IP address of an initiator to be added.

In response to this, the iSNS server 130 returns a response for the initiator program 111 (step 1802), and updates contents of the database 131 (step 1803). Then, the iSNS server 130 notifies addition of initiator to the target program 201 by an SCN (Specification Change Notice) (step 1804).

The target program 201 calls the disk start program 202 with an initiator name as a parameter (step 1805), and thereby the disk start program 202 starts rotating the disks 105 (1806).

Thus the target program 201 can start rotating disks 105 triggered by receiving an SCN (message) for notifying addition of initiator.

FIG. 19 is a diagram showing operation of the target program 201 when an SCN for notifying addition of initiator is received from the iSNS server 130 (step 1804 in FIG. 18). The CPU 101 executes the target program 201 stored in the memory 102 to process this operation.

First, the target program 201 judges whether it has received an SCN for notifying addition of initiator or not (step 1901), and reads an initiator name contained in the SCN (step 1902) when having received the SCN (Yes). And then, the target program 201 calls the disk start program 202 with the initiator name as a parameter (step 1903).

Operation of the disk start program 202 is similar to the operation in the first embodiment when only one initiator is assigned to an LU and the operation in the second embodiment when a plurality of initiators are assigned to an LU.

Thus, the target program 201 can start appropriate disks 105 when having received an SCN for notifying addition of initiator.

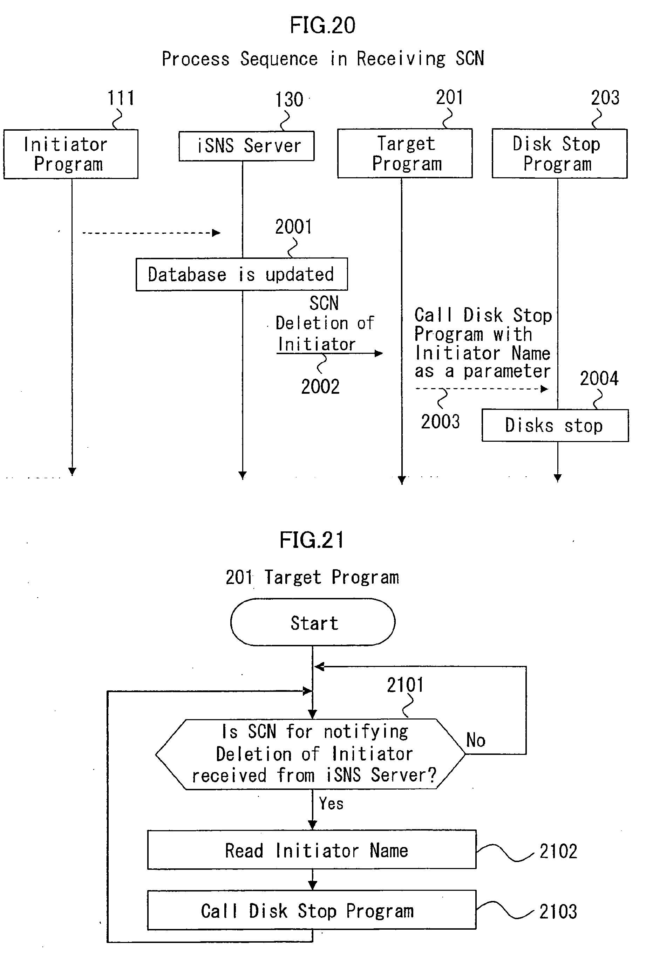

FIG. 20 is a diagram illustrating exchange of messages and data among the initiator program 111, the iSNS server 130, the target program 201, and the disk stop program 203 when the iSNS server 130 deletes an initiator by updating the database 131.

First, the iSNS server 130 updates contents of the database 131, that is, deletes an initiator triggered by being requested from the initiator program 111 (such as attribute registration) or passing expiration time of an initiator stored in the database 131 (step 2001).

Then, the iSNS server 130 notifies deletion of initiator to the target program 201 by an SCN (step 2002).

Moreover, the target program 201 calls the disk stop program 203 with an initiator name as a parameter (step 2003), and thereby the disk stop program 203 stops rotating the disks 105 (2004).

Thus the target program 201 can stop rotating disks 105 triggered by receiving an SCN (message) for notifying deletion of initiator.

FIG. 21 is a diagram showing operation of the target program 201 when an SCN for notifying deletion of initiator is received from the iSNS server 130 (step 2002 in FIG. 20). The CPU 101 executes the target program 201 stored in the memory 102 to process this operation.

The target program 201 judges whether it has received an SCN for notifying deletion of initiator or not (step 2101), and reads an initiator name contained in the SCN (step 2102) when having received the SCN (Yes). And then, the target program 201 calls the disk stop program 203 with the initiator name as a parameter (step 2103).

Operation of the disk stop program 203 is similar to the operation in the first embodiment when only one initiator is assigned to an LU and the operation in the second embodiment when a plurality of initiators are assigned to an LU.

Thus, the target program 201 can stop appropriate disks 105 when an SCN for notifying deletion of initiator is received.

### FIFTH EMBODIMENT

In the fifth embodiment, an example in a case where the storage unit 100 inquires information about initiators to the iSNS server 130 to start and stop rotating disks based on the results (see FIG. 1, and so on as needed) is described.

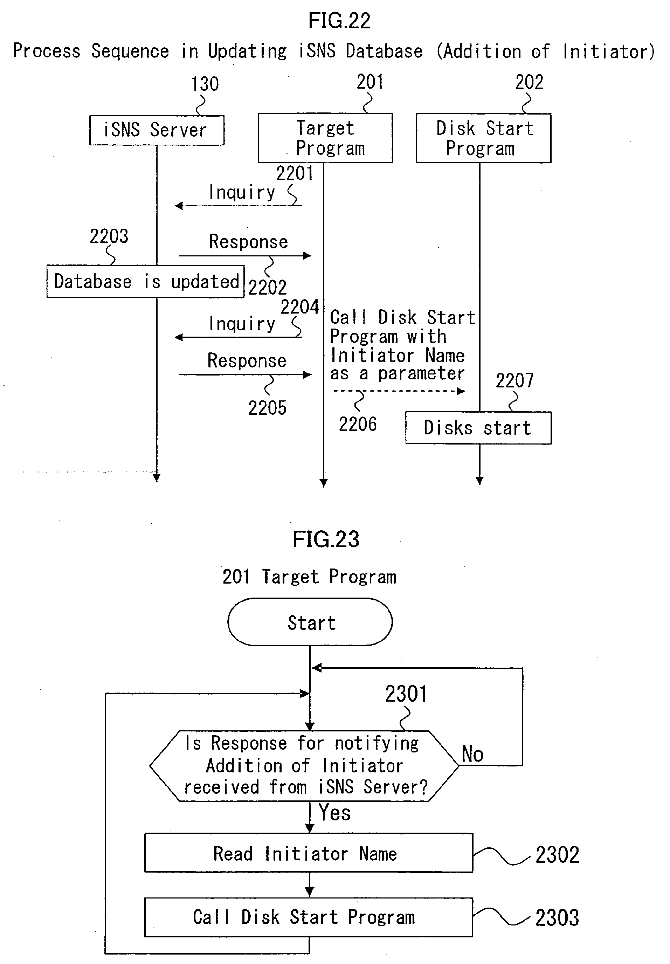

FIG. 22 is a diagram illustrating exchange of messages and data among the iSNS server 130, the target program 201, and the disk start program 202 when the target program 201 inquires information about initiators to the iSNS server 130 and an initiator is added in the iSNS server 130.

The target program 201 inquires to the iSNS server 130 periodically (step 2201), and the iSNS server 130 returns a response for it to the target program 201 (step 2202).

Here, it is assumed that the iSNS server 130 updates contents of the database 131 (addition of initiator) at a timing triggered by attribute registration from the initiator program 111, or the like (step 2203).

The target program 201 inquires to the iSNS server 130 (step 2204), the iSNS server 130 returns a response for notifying addition of initiator to the target program 201 (step 2205).

When having received the response, the target program 201 calls the disk start program 202 with the initiator name as a parameter (step 2206), and thereby the disk start program 202 starts rotating the disks 105 (step 2207).

Thus, the target program 201 can start rotating disks 105 triggered by a response (message) for notifying addition of initiator.

FIG. 23 is a diagram showing operation of the target program 201 when inquiring to the iSNS server 130 and receiving a response for notifying addition of initiator (step 2205 in FIG. 22). The CPU 101 executes the target program 201 stored in the memory 102 to process this operation.

First, the target program 201 judges whether it has received a response for notifying addition of initiator from the iSNS server 130 or not (step 2301), and reads an initiator name contained in the response (step 2302) when having received the response (Yes). And then, the target program 201 calls the disk start program 202 with the initiator name as a parameter (step 2303).

Operation of the disk start program 202 is similar to the operation in the first embodiment when only one initiator is assigned to an LU and the operation in the second embodiment when a plurality of initiators are assigned to an LU.

Thus, the target program 201 can start appropriate disks 105.

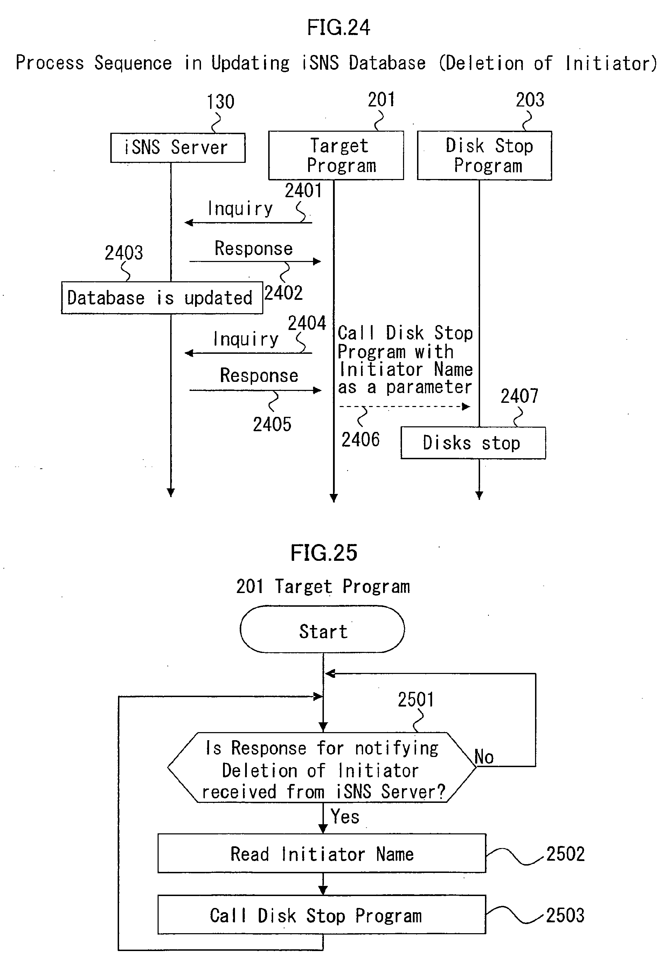

FIG. 24 is a diagram illustrating exchange of messages and data among the iSNS server 130, the target program 201, and the disk stop program 203 when the target program 201 inquires information about initiators to the iSNS server 130 and an initiator is deleted in the iSNS server 130.

The target program 201 inquires to the iSNS server 130 periodically (step 2401), and the iSNS server 130 returns a response for it to the target program 201 (step 2402).

Here, it is assumed that the iSNS server 130 updates contents of the database 131 (deletion of initiator) at a timing triggered by attribute registration from the initiator program 111, passing expiration time of an initiator, or the like (step 2403).

The target program 201 inquires to the iSNS server 130 (step 2404), the iSNS server 130 returns a response for notifying deletion of initiator to the target program 201 (step 2405).

When having received the response, the target program 201 calls the disk stop program 203 with the initiator name as a parameter (step 2406), and thereby the disk stop program 203 stops rotating the disks 105 (step 2407).

Thus, the target program 201 can stop rotating disks 105 triggered by a response (message) for notifying deletion of initiator.

FIG. 25 is a diagram showing operation of the target program 201 when inquiring to the iSNS server 130 and then receiving a response for notifying deletion of initiator (step 2405 in FIG. 24). The CPU 101 executes the target program 201 stored in the memory 102 to process this operation.

First, the target program 201 judges whether it has received a response for notifying deletion of initiator from the iSNS server 130 or not (step 2501), and reads an initiator name contained in the response (step 2502) when having received the response (Yes). And then, the target program 201 calls the disk stop program 203 with the initiator name as a parameter (step 2503).

Operation of the disk stop program 203 is similar to the operation in the first embodiment when only one initiator is assigned to an LU and the operation in the second embodiment when a plurality of initiators are assigned to an LU.

Thus, the target program 201 can stop appropriate disks 105.

### SIXTH EMBODIMENT

In the sixth embodiment, it is assumed that the storage unit 100 starts rotating the disks 105 triggered by occurrence of any of events possible to trigger to start rotating disks described in from the first to the fifth embodiments. In addition, it is also assumed that the storage unit 100 stops rotating the disks 105 triggered by occurrence of any of events possible to trigger to stop rotating disks described in from the first to the fifth embodiments.

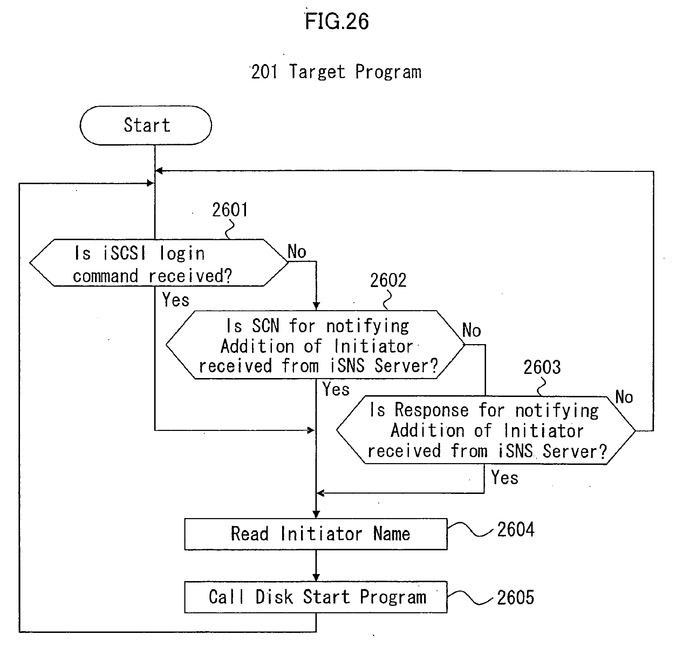

FIG. 26 is a diagram showing operation of the target program 201 when an event possible to trigger to start rotating disks is received. The CPU 101 executes the target program 201 stored in the memory 102 to process this operation.

When receiving one of an iSCSI login command from the initiator program 111 (Yes in step 2601), an SCN for notifying addition of initiator from the iSNS server 130 (Yes in step 2602), or a response for notifying addition of initiator from the iSNS server 130 (Yes in step 2603) as one of messages for notifying events possible to trigger to start rotating disks, the target program 201 reads an initiator name contained in the message (step 2604). And then, the target program 201 calls the disk start program 202 with the initiator name as a parameter (step 2605).

Operation of the disk start program 202 is similar to the operation in the first embodiment when only one initiator is assigned to an LU and the operation in the second embodiment when a plurality of initiators are assigned to an LU.

Thus, the target program 201 can start rotating disks 105 based on any of events possible to trigger to start rotating disks 105. The target program 201 can also operate similarly to stop rotating the disks 105.

### SEVENTH EMBODIMENT

In each of the embodiments described above, an event such as that a user of the host 110 powers on the host 110 to start using the disks 105 or that a user of the host 110 powers off the host 110 to stop using the disks 105 triggers to start or stop rotating the disks 105. However, it is possible to use software, which is running on a computer and plays a similar role as an initiator, in the virus check server 140 which is powered on all the time, to start and stop using disks automatically.

### EIGHTH EMBODIMENT

In the present embodiment, in a discovery session, a target name is informed to an initiator not when the disks 105 to be used by the initiator are just started, but when the disks 105 become ready to use (see FIG. 1, and so on as needed).

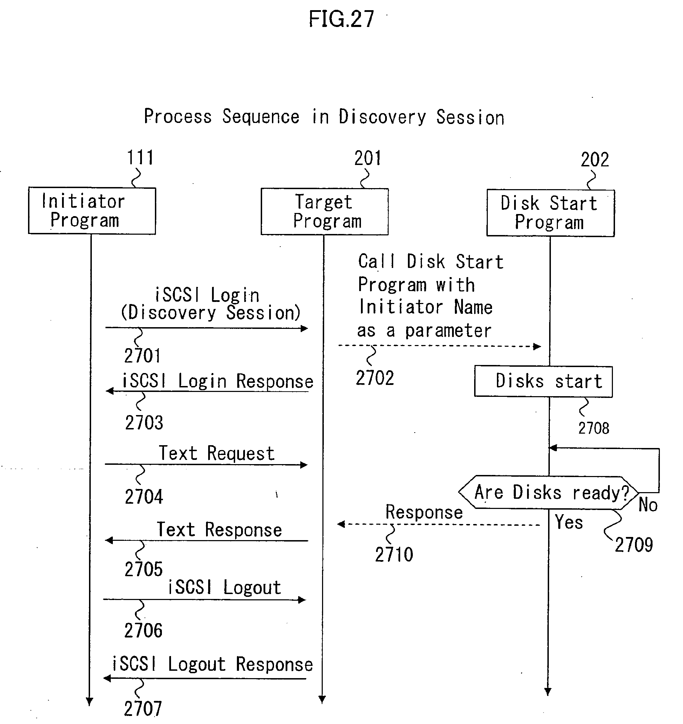

FIG. 27 is a diagram illustrating exchange of messages and data among the initiator program 111, the target program 201, and the disk start program 202 when the initiator program 111 sends an iSCSI login command for a discovery session to the target program 201.

The initiator program 111 sends an iSCSI login command for a discovery session to the target program 201 (step 2701).

Having received the iSCSI login command for the discovery session, the target program 201 executes the disk start program 202. Here, the target program 201 reads an initiator name contained in the iSCSI login command and calls the disk start program 202 with the initiator name as a parameter (step 1702).

Then, the target program 201 sends a response for the iSCSI login to the initiator program 111 (step 2703).

When having received the response, the initiator program 111 sends a Text Request command to inquire a target name to the target program 201 (step 2704).

Meanwhile, when the disk start program 202 has started rotating disks 105 (step 2708) and then the disks 105 become ready (to use) (Yes in step 2709), the disk start program 202 sends a response for the target program 201 (step 2710).

After step 2704, the target program 201 receives the response from the disk start program 202 (step 2710) and then returns a Text Response to the initiator program 111 (step 2705).

After that, the initiator program 111 sends an iSCSI logout command to the target program 201 (step 2706) and receives a response for the iSCSI logout from the target program 201 (step 2707), and then the discovery session ends.

Operation of the disk start program 202 is similar to the operation in the first embodiment when only one initiator is assigned to an LU and the operation in the second embodiment when a plurality of initiators are assigned to an LU.

According to the present embodiment, it is possible to prevent an initiator from issuing a read request to disks 105 which have not yet become ready to use.

As described above, according to the storage unit 100 in the computer system S in each of the present embodiments, it is possible to start rotating the disks 105 appropriately by predicting that the host 110 starts accessing the disks 105 triggered by an event such as an iSCSI login (for a normal or a discovery session) or a notice of addition of initiator from the iSNS server 130. In addition, it is also possible to stop rotating the disks 105 appropriately by predicting that the host 110 stops accessing the disks 105 triggered by an event such as an iSCSI logout or a notice of deletion of initiator from the iSNS server 130. Accordingly, it is possible to cut down power consumption of the disks 105 and reduce mechanical strain to prolong lifetime of the disks 105.

Moreover, when a diskless PC or a server such as a virus check server which scans disks accesses the storage unit 100, it is similarly possible to predict to start/stop accessing the disks 105 to start/stop rotating the disks 105, resulting to reduce power consumption and prolong lifetime of the disks 105

According to aspects of the present invention, it is possible to reduce power consumption and prolong lifetime of disks in a storage unit.

Though the embodiments of the present invention have been described, it is to be understood that the invention is not limited to the embodiments. For example, the invention can be applied similarly when a search engine, or the like, scans disks. The other changes can be made in practical structures of hardware, flow charts, and so on as needed without departing from the spirit and scope of the invention

## Claims

1. A storage unit connected to a host computer through a network, having one or more disks in which read and write operations are performed during rotation and a control unit for controlling the rotation of the disks, wherein
when receiving a message which is sent from the host computer and predicts that at least one of the disks will come in use, the control unit causes the at least one of the disks which will come in use, to rotate.

2. A storage unit according to claim 1, wherein the message is an iSCSI login for a normal session.

3. A storage unit according to claim 1, wherein the message is an iSCSI login for a discovery session.

4. A storage unit connected to a host computer through a network, having one or more disks in which read and write operations are performed during rotation and a control unit for controlling the rotation of the disks, wherein
when receiving a message which is sent from the host computer and predicts that at least one of the disks will go out of use, the control unit causes the at least one of the disks which will go out of use, to stop.

5. A storage unit according to claim 4, wherein the message is an iSCSI logout for a normal session.

6. A storage unit according to claim 1, wherein
the control unit uses information about whether initiators in the host computer are using each of the at least one of the disks which will come in use, and causes the disk to start rotating if the number of initiators which are using the disk is 0.

7. A storage unit according to claim 4, wherein
the control unit uses information about whether initiators in the host computer are using each of the at least one of the disks which will go out of use, and causes the disk to stop rotating if the number of initiators which are using the disk is 1.

8. A storage unit connected to a host computer and an iSNS (Internet Storage Name Service) server through a network, having one or more disks in which read and write operations are performed during rotation and a control unit for controlling the rotation of the disks, wherein
when receiving a message which is sent from the iSNS server and predicts that the host computer will start using at least one of the disks, the control unit causes the at least one of the disks which the host computer will start using, to rotate.

9. A storage unit according to claim 1 or 8, wherein the message is an SCN (Specification Change Notice) message for notifying addition of initiator in iSNS protocol.

10. A storage unit according to claim 4, wherein the message is an SCN message for notifying deletion of initiator in iSNS protocol.

11. A storage unit according to claim 1 or 8, wherein the message is a response message for notifying addition of initiator in iSNS protocol in response to an inquiry from the control unit.

12. A storage unit according to claim 4, wherein the message is a response message for notifying deletion of initiator in iSNS protocol in response to an inquiry from the control unit.

13. A storage unit connected to a host computer and an iSNS server through a network, having one or more disks in which read and write operations are performed during rotation and a control unit for controlling the rotation of the disks, wherein
when receiving a message which is sent from the host computer or the iSNS server and predicts that the host computer will start using at least one of the disks, the control unit causes the at least one of the disks which the host computer will start using, to rotate, and wherein
the message is one of an iSCSI login for a normal session, an iSCSI login for a discovery session, an SCN message for notifying addition of initiator in iSNS protocol, or a response message for notifying addition of initiator in iSNS protocol in response to an inquiry from the control unit.

14. A storage unit according to claim 1, wherein after causing the at least one of the disks which will come in use, to rotate, the control unit notifies to the host computer that the at least one of the disks are ready to use when the at least one of the disks have become ready to use.

15. A disk control method in a storage unit connected to a host computer through a network, having one or more disks in which read and write operations are performed during rotation and a control unit for controlling the rotation of the disks, wherein
when receiving a message which is sent from the host computer and predicts that at least one of the disks will come in use, the control unit causes the at least one of the disks which will come in use, to rotate.

16. A disk control method according to claim 15, wherein the message is an iSCSI login for a normal session or a discovery session.

17. A disk control method in a storage unit connected to a host computer through a network, having one or more disks in which read and write operations are performed during rotation and a control unit for controlling the rotation of the disks, wherein
when receiving a message which is sent from the host computer and predicts that at least one of the disks will go out of use, the control unit causes the at least one of the disks which will go out of use, to stop.

18. A disk control method according to claim 17, wherein the message is an iSCSI logout for a normal session.

19. A disk control method according to claim 15, wherein
the control unit uses information about whether initiators in the host computer are using each of the at least one of the disks which will come in use, and causes the disk to start rotating if the number of initiators which are using the disk is 0.

20. A disk control method according to claim 17, wherein
the control unit uses information about whether initiators in the host computer are using each of the at least one of the disks which will go out of use, and causes the disk to stop rotating if the number of initiators which are using the disk is 1.
